# EUROPÄISCHE PATENTANMELDUNG

(11) **EP 4 227 522 A1**
(43) Veröffentlichungstag der Anmeldung: **16.08.2023**
(21) Anmeldenummer: 22156881.9
(22) Anmeldetag: 15.02.2022
(51) Int. Cl.: F03D 1/06, F03D 80/50

(54) **ROTORBLATT, WINDENERGIEANLAGE, SERRATIONSWINKEL, UMGEBUNGSPARAMETER**

(71) Anmelder: Wobben Properties GmbH, 26607 Aurich (DE)
(72) Erfinder: Messing, Ralf, 26605 Aurich (DE); Stemberg, Jochen, 26607 Aurich (DE)
(74) Vertreter: Eisenführ Speiser

(57) **Zusammenfassung**

Die vorliegende Erfindung betrifft ein Rotorblatt (108) einer Windenergieanlage (100), eine zugehörige Windenergieanlage (100), einen zugehörigen Windpark und zugehörige Verfahren. Das Rotorblatt (108) weist eine Vorderkante (131) und eine Hinterkante (132) auf und erstreckt sich in einer Rotorblattlängsrichtung zwischen einem Wurzelende (133) und einem Spitzenende (134), wobei eine direkte Verbindung zwischen der Vorderkante (131) und der Hinterkante (132) als Profilsehne (130) bezeichnet wird, wobei das Rotorblatt (108) im Bereich der Hinterkante (132) wenigstens abschnittsweise Serrations (136-137, 140-146, 442-446) aufweist, wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, dadurch gekennzeichnet, dass ein Winkel (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlage (100) ausgebildet ist.

## Beschreibung

Die vorliegende Offenbarung betrifft ein Rotorblatt einer Windenergieanlange, eine zugehörige Windenergieanlage sowie ein Verfahren zum Optimieren eines Rotorblatts, ein Verfahren zum Betreiben einer Windenergieanlage und ein Verfahren zum Warten eines Rotorblatts.

Windenergieanlagen sind weithin bekannt. Mittels aerodynamisch wirkender Rotorblätter dienen diese dazu, Energie aus dem Wind zu entnehmen und beispielsweise in elektrische Energie umzuwandeln.

Ein Ziel ist es hierbei, den aus dem Wind entnommenen Energieertrag zu maximieren. Rotorblätter werden für bestimmte Auslegungsparameter entwickelt und hergestellt und sind dann fürdiese gegebenen Parameter optimal ausgelegt. Sobald sich aber Abweichungen zwischen diesen Auslegungsparametern und Umgebungsparametern am Aufstellort der Windenergieanlage ergeben, ist das Rotorblatt nicht mehr optimal ausgelegt für die geänderten Umgebungsparameter und die Induktion des Rotorblatts ist weniger vorteilhaft, was, beispielsweise, zu einer Reduzierung des Ertrags des Rotorblatts führt.

Vor diesem Hintergrund war es eine Aufgabe der vorliegenden Erfindung, Rotorblätter für eine größere Bandbreite von Umgebungsparametern optimal betreiben zu können.

In einem ersten Aspekt wird ein Rotorblatt einer Windenergieanlage bereitgestellt, wobei das Rotorblatt eine Vorderkante und eine Hinterkante aufweist und sich in einer Rotorblattlängsrichtung zwischen einem Wurzelende und einem Spitzenende erstreckt, wobei eine direkte Verbindung zwischen der Vorderkante und der Hinterkante als Profilsehne bezeichnet wird, wobei das Rotorblatt im Bereich der Hinterkante wenigstens abschnittsweise Serrations aufweist, wobei jede der Serrations eine Grundlinie, die an der Hinterkante angeordnet ist, und einen Endpunkt, der am weitesten von der Grundlinie entfernt ist, aufweist, die zusammen eine Ebene der Serration aufspannen, dadurch gekennzeichnet, dass ein Winkel zwischen der Ebene mindestens einer der Serrations und der zugehörigen lokalen Profilsehne des Rotorblatts in Abhängigkeit mindestens eines Umgebungsparameters am Aufstellort der Windenergieanlange ausgebildet ist.

Serrations sind aus der Strömungsmechanik bekannt und werden auch als "Hinterkantenkamm" bezeichnet. Die Serration als solche umfasst hierbei ein oder mehrere vorzugsweise zackenförmige Einkerbungen im Bereich der Hinterkante des Rotorblattes, so dass die Abströmkante im Bereich der Serrations in Rotorblattlängsrichtung nicht geradlinig ausgeführt ist.

Auf der Rotorblattoberfläche bildet sich bei der Umströmung eine sogenannte Grenzschicht aus, in der sich Turbulenzen (Wirbel) unterschiedlicher Größe bilden. Im Bereich der Blatthinterkante erzeugen diese Wirbel dann das typische, breitbandige Geräusch eines Rotorblattes (Hinterkantenschall). Durch die Zacken oder mit anderer Form ausgeführten Unterbrechungen der Abströmkante wird der entstehende Luftstrom um das Rotorblatt mit seinen großen Wirbeln in kleinere Wirbel aufgelöst, dadurch reduziert sich beispielsweise das Blattgeräusch.

Eine "Serration" bezeichnet hierbei im Rahmen der vorliegenden Offenbarung gerade einen Zacken eines solchen Hinterkantenkamms.

Neben der akustischen Wirkung verändern die Serrations aber auch den lokalen Induktionsfaktor des Rotorblattes an der Position der Serration. Das heißt, die Serrations haben auch einen Einfluss auf den Ertrag der Windenergieanlage.

Es ist eine Erkenntnis der Erfinder der vorliegenden Offenbarung, dass der Einfluss der Serration auf den lokalen Induktionsfaktor von dem Einbauwinkel der Serration bezogen auf die lokale Profilsehne abhängt. Damit haben die Erfinder erkannt, dass der Winkel der Serration zur gezielten Erhöhung bzw. Verringerung lokaler Induktionsfaktoren beitragen kann.

Zur gleichen Zeit haben die Erfinder festgestellt, dass Umgebungsparameter am Aufstellungsort der Windenergieanlage von Auslegungsparametern des Rotorblattes verschieden sein können. Abweichungen der tatsächlichen Umgebungsparameter von Auslegungsparametern führen regelmäßig zu Ertragseinbußen, da beispielsweise die Induktionsfaktorverteilung aufgrund der tatsächlichen Umgebungsparameter nicht mehr ideal ist. Die Anpassung des Winkels ermöglicht eine besonders wirksame und einfache Kompensation der Einflüsse der Umgebungsparameter, ohne strukturelle oder geometrische Anpassungen an dem Rotorblatt vorzunehmen. Damit wird ermöglicht, dass ein Rotorblatt ohne Schwierigkeiten für eine große Bandbreite von Umgebungsparametern optimal betreibbar ist.

Die Serrations können integral mit dem Rotorblatt gefertigt sein oder an dem Rotorblatt montiert, beispielsweise aufgeklebt sein. In jedem Fall erstrecken sich die Serrations in Umströmungsrichtung über die Hinterkante hinaus, wobei die Hinterkante im Rahmen dieser Offenbarung als die hinterste Verbindungslinie definiert wird, bei der noch keine Unterbrechungen der Abströmkante vorhanden sind.

Die Hinterkante bezeichnet die Verbindung der Punkte, an denen das Profil des Rotorblatts geschlossen ist, das heißt also, der Verbindungspunkte der saugseitigen und der druckseitigen Profilkontur. Zudem ist die Hinterkante auch in Rotorblattlängsrichtung geschlossen, das heißt die beispielsweise durch Serrations unterbrochene Abströmkante ist in Strömungsrichtung erst hinter der Hinterkante unterbrochen. Wenn das Profil des Rotorblatts nicht geschlossen ist, beispielsweise wenn das Rotorblatt eine sogenannte dicke Hinterkante (engl: "blunt trailing edge") aufweist, werden die Punkte berücksichtigt welche sich in der Mitte der "blunt trailing edge" befinden, wobei die Mitte in einer Richtung senkrecht auf der Profilsehne und auf der "blunt trailing edge" zu verstehen ist.

Die Vorderkante besteht aus den Punkten des Profils, die senkrecht auf der Rotorblattlängsrichtung jeweils am weitesten von der Hinterkante entfernt sind. Die Profilsehne bezeichnet die jeweils kürzeste Verbindung zwischen Vorderkante und Hinterkante.

Jede der Serrations hat eine zugehörige lokale Profilsehne. Die zugehörige lokale Profilsehne einer der Serrations ist vorzugsweise die Profilsehne, welche sich in der Rotorblattlängsrichtung in der Mitte der Grundlinie der jeweiligen Serration befindet. In der vorliegenden Offenbarung ist mit dem Begriff Profilsehne, in Zusammenhang mit einer der Serrations, die zugehörige lokale Profilsehne zu verstehen.

Jede der Serrations weist eine Grundlinie, die an der Hinterkante angeordnet ist, auf. Eine Grundlinie, die an der Hinterkante angeordnet ist, bedeutet, dass die Grundlinie auf der Hinterkante ist, beziehungsweise mit der Hinterkante übereinstimmt. Falls die Serrations nicht direkt an der Hinterkante montiert sind, sondern in dem Bereich der Hinterkante beispielsweise nicht direkt in das Rotorblatt integriert sind und mit einem Abstand zu der Hinterkante montiert sind, dann ist zu verstehen, dass die Grundlinie die senkrechte Projektion der Hinterkante in Profiltiefenrichtung, senkrecht zu der Hinterkante und zu der Profilsehne, auf die Serration die Grundlinie der Serration ergibt. Auch dieser Fall wird im Rahmen dieser Offenbarung als "eine Grundlinie, die an der Hinterkante angeordnet ist," verstanden.

Im Bereich der Hinterkante bedeutet vorzugsweise, dass die Serrations direkt an der Hinterkante oder in Umgebung der Hinterkante angeordnet sind. Die Serrations können in dem Rotorblatt integriert oder daran montiert sein. Die Umgebung der Hinterkante umfasst vorzugsweise einen Bereich, welcher sich ausgehend von der Hinterkante bis zu einer Distanz von 20% der lokalen Profilsehne, bevorzugt bis zu einer Distanz von 5% der lokalen Profilsehne, besonders bevorzugt bis zu einer Distanz von 1% der lokalen Profilsehne, ausstreckt. Somit erstreckt sich der Bereich der Hinterkante auf die Druckseite und auf die Saugseite des Rotorblatts.

Das Rotorblatt weist wenigstens abschnittsweise Serrations im Bereich der Hinterkante auf. Damit ist vorzugsweise zu verstehen, dass das Rotorblatt nur eine Serration die an einer beliebigen Position im Bereich der Hinterkante des Rotorblatts angeordnet ist, oder nur zwei Serrations welche nebeneinander oder an einer beliebigen Position im Bereich der Hinterkante des Rotorblatts angeordnet sind, oder mehrere Serrations, welche in einem oder mehreren Abschnitten im Bereich der Hinterkante des Rotorblatts angeordnet sind, aufweist.

Serrations sind eine Mehrzahl von vorzugsweise periodischen Vertiefungen oder Auskerbungen in einer Rotorblattlängsrichtung. Die Serrations weisen vorzugsweise eine Sägezahnkonfiguration auf, wobei der enthaltene Winkel zwischen zwei benachbarten Zähnen vorzugsweise 60° beträgt, aber andere Formen der Serrations sind möglich, insbesondere gewölbte Formen oder Bürsten.

Für Serrations, welche an der Hinterkante montiert sind, ist die Grundlinie einer jeweiligen Serration der Schnitt der Hinterkante und der jeweiligen Serration.

Serrations können auch nicht direkt an der Hinterkante montiert sein, sondern in dem Bereich der Hinterkante, also beispielsweise in einem gewissen Abstand entfernt von der Hinterkante montiert sein. Auch in diesem Fall ragt die Fläche der jeweiligen Serrations über die Hinterkante hinaus, um den Einfluss auf die Ablösungen hinter der Hinterkante zu gewährleisten. Für diese Serration wird vorzugsweise die Hinterkante senkrecht, senkrecht zu der Hinterkante und zu der Profilsehne, auf die Serration projiziert und diese Projektion auf die Serration ergibt die Grundlinie der Serration. Falls die Serration so ausgestaltet ist, dass sie die senkrechte Projektion, senkrecht zu der Hinterkante und zu der Profilsehne, der Hinterkante die Serration mehrmals schneidet, so ist nur derjenige Schnitt zu berücksichtigen, welcher am nächsten zu der Hinterkante ist.

Ein Endpunkt ist der Punkt der Serration, der am weitesten von der Grundlinie der Serration entfernt ist. Es ist möglich, dass mehrere Punkte auf der Serration am weitesten von der Grundlinie der Serration entfernt sind und all diese Punkte gleichweit von der Grundlinie der Serration entfernt sind, in so einem Fall gibt es mehrere Endpunkte.

Die Ebene der Serration wird zwischen der Grundlinie der Serration und dem Endpunkt der Serration aufgespannt. Falls die Serration mehrere Endpunkte offenbart, wird, um die Ebene der Serration zu definieren, der Endpunkt gewählt, welcher den größten Betrag des Winkels zwischen der Ebene der Serration und der lokalen Profilsehne des Rotorblatts offenbart.

Um den Winkel zwischen der Ebene je einer der Serrations und der Profilsehne des Rotorblatts zu bestimmen, wird bevorzugt die Profilsehne gewählt, deren Position in der Rotorblattlängsrichtung der Mitte der Grundlinie je einer der Serrations entspricht. Als eine Alternative ist es vorzugsweise möglich, die Profilsehne zu wählen, welche zu dem größten Winkel zwischen der Ebene je einer der Serrations und der Profilsehne führt. Um die Profilsehne zu bestimmen, welche zu dem größten Winkel zwischen der Ebene je einer der Serrations und der Profilsehne führt, kann vorzugsweise für jede Profilsehne der Winkel zwischen der Ebene je einer der Serrations und dieser Profilsehne bestimmt werden, um dann die Profilsehne zu bestimmen, welche den größten Winkel offenbart.

Der Aufstellort einer Windenergieanlage ist der Ort, an dem die Windenergieanlage errichtet ist oder zur Errichtung vorgesehen ist.

Die Einstellung des Winkels mindestens einer der Serrations kann passiv oder aktiv erfolgen. Eine aktive Einstellung ist vorzugsweise, wenn der Winkel im Zusammenhang mit sich ändernden Umgebungsparametern am Aufstellungsort des Rotorblatts eingestellt wird. In anderen Worten ausgedrückt wird der Winkel regelmäßig oder zumindest einmalig nach der Inbetriebnahme des Rotorblatts eingestellt, um das Rotorblatt für die aktuellen Umgebungsparameter am Aufstellungsort des Rotorblatts zu optimieren.

Anstelle der aktuellen Umgebungsparameter am Aufstellungsort des Rotorblatts können auch ein Extremwert, ein Durchschnittswert und/oder eine Varianz von Umgebungsparametern am Aufstellungsort des Rotorblatts, welche vorzugsweise über einen Zeitabschnitt gemessen oder abgeschätzt wurden, verwendet werden. Dabei ist insbesondere auch eine Einstellung des Winkels in Abhängigkeit der vier Jahreszeiten, Winter, Frühjahr, Sommer, Herbst, vorteilhaft.

Gemäß einer bevorzugten Ausführung des Rotorblatts, enthält der mindestens eine Umgebungsparameter am Aufstellort der Windenergieanlange ein oder mehrere Parameter die indikativ sind für Luftdichte, Luftfeuchtigkeit, Temperatur, Luftdruck, Luftverschmutzung, Turbulenz bzw. Turbulenzintensität, Scherung und/oder Windgeschwindigkeit.

Die Parameter, die indikativ sind für Luftdichte, Luftfeuchtigkeit, Temperatur, Luftdruck, Luftverschmutzung, Turbulenz bzw. Turbulenzintensität, Scherung und/oder Windgeschwindigkeit, haben einen Einfluss auf die Induktion des Rotorblatts an dem jeweiligen Aufstellort der Windenergieanlage und eignen sich deshalb besonders als Umgebungsparameter. Unter Berücksichtigung dieser Parameter kann die Induktion des Rotorblatts optimiert werden, insbesondere kann die Induktion des Rotorblatts für den mindestens einen Umgebungsparameter des Aufstellungsorts der Windenergieanlage optimiert werden.

Die Luftverschmutzung kann berücksichtigt werden, um die Geschwindigkeit der Verschmutzung der Rotorblätter und/oder die maximale erreichbare Verschmutzung des Rotorblatts zu bestimmen, beziehungsweise abzuschätzen. Als Luftverschmutzung werden insbesondere eine durchschnittliche Insektendichte, Partikeldichte, wobei insbesondere Partikel berücksichtigt werden, die mindestens einen Durchmesser von 1µm aufweisen, Salzgehalt und/oder korrosionsbeschleunigende Chemikalien, bezeichnet. Ein Salzgehalt in der Luft ist insbesondere von Bedeutung, wenn die Windenergieanlage in einer Küstenregion betrieben wird. Als Küstenregion wird vorzugsweise eine Region verstanden, die sich vom Meeresufer bis 100 Kilometer auf den Kontinent erstreckt. Korrosionsbeschleunigende Chemikalien sind insbesondere von Bedeutung, wenn die Windenergieanlage in einem Umfeld von bis zu 200 Kilometern von luftverschmutzender Industrie, wie vorzugsweise Kohlekraftwerke, chemische Industrie, Recyclinganlagen, Verbrennungsanlagen und/oder Textilindustrie, betrieben wird. Ein oder mehrere dieser Faktoren können, wenn vorhanden, den Grad der Luftverschmutzung und damit die Geschwindigkeit der Verschmutzung erhöhen, beziehungsweise beeinflussen. Korrosionsbeschleunigende Chemikalien und/oder Salzgehalt können, wenn vorhanden, die Geschwindigkeit beeinflussen mit welcher das Rotorblatt korrodier, beziehungsweise beschleunigen.

Gemäß einer vorteilhaften Ausführung des Rotorblatts umfasst der Parameter, der in dem mindestens einen Umgebungsparameter am Aufstellort der Windenergieanlange enthalten ist, einen Extremwert, einen Durchschnittswert und/oder eine Varianz der Luftdichte, Luftfeuchtigkeit, Temperatur, Luftdruck, Luftverschmutzung, Turbulenz bzw. Turbulenzintensität, Scherung und/oder Windgeschwindigkeit.

Es ist vorteilhaft einen Extremwert zu berücksichtigen, um die Einhaltung von Regulierungen, wie vorzugsweise Schalldruckregulierungen, zu gewährleisten und/oder um die Sicherheit der Windenergieanlage zu gewährleisten, indem sichergestellt wird, dass die Windenergieanlage den mechanischen Belastungen, denen es beispielsweise bei extremen Umgebungsbedingungen ausgesetzt ist, auch standhält. Ein Durchschnittswert ist insbesondere vorteilhaft einsetzbar, um eine einfache Bewertung des jeweiligen Umgebungsparameters zu ermöglichen. Die Varianz kann vorteilhaft berücksichtigt werden, um eine Schwankung oder Güte und damit auch eine Zuverlässigkeit des verwendeten Umgebungsparameters zu definieren.

Ein Extremwert kann insbesondere ein Höchst- oder Tiefstwert sein, welcher am Aufstellungsort vorzugsweise in den letzten 5 Jahren, 20 Jahren und/oder 100 Jahren gemessen wurde. Insbesondere ist es vorteilhaft als Extremwert einen Höchst- oder Tiefstwert zu benutzen, welcher anhand eines Sicherheitszuschlags von einem am Aufstellungsort der Windenergieanlage gemessenen Höchst- oder Tiefstwert abgeleitet wurde. Insbesondere kann als Extremwert ein Höchst- oder Tiefstwert verwendet werden, welcher anhand der Umgebung an dem Aufstellungsort der Windenergieanlage außerhalb der zu erwartenden Werten liegt.

Gemäß einer bevorzugten Ausführung des Rotorblatts ist der Winkel zwischen der Ebene je einer der Serrations und der Profilsehne des Rotorblatts für mindestens zwei der Serrations unterschiedlich.

Das Ändern eines Winkels zwischen der Ebene einer Serration und der Profilsehne des Rotorblatts beeinflusst die lokale Induktion des Rotorblatts. Indem der Winkel für mindestens zwei der Serrations unterschiedlich ist, kann die lokale Induktion des Rotorblatts mit mehr Freiheitsgraden optimiert werden, als wenn alle Serrations denselben Winkel aufweisen und die Induktion des Rotorblatts kann somit insbesondere besser optimiert werden.

Mit unterschiedlichen Winkeln, zwischen der Ebene je einer der Serrations und der Profilsehne des Rotorblatts, für mindestens zwei der Serrations, wird, in Abhängigkeit der Montageposition mindestens einer der Serrations, eine positionsabhängige Optimierung der Induktion des Rotorblatts ermöglicht. Somit ist es insbesondere möglich, ein Rotorblatt, welches an mindestens einer Position des Rotorblatts eine unvorteilhafte Induktion aufweist, zum Beispiel wegen Transportbeschränkungen und/oder Stabilitätsgründen und/oder weil das Rotorblatt für andere Umgebungsparameter konzipiert und/oder optimiert wurde, für gegebene Umgebungsparameter zu optimieren. Diese Optimierung wird erzielt, indem die mindestens eine Position, an welcher das Rotorblatt eine unvorteilhafte Induktion aufweist, anhand einer von der Montageposition abhängigen Einstellung des Winkels mindestens einer der Serrations optimiert wird.

Gemäß einer bevorzugten Ausführung des Rotorblatts ist der Winkel zwischen der Ebene mindestens einer der Serrations und der Profilsehne des Rotorblatts in Abhängigkeit des mindestens einen Umgebungsparameters und zusätzlich in Abhängigkeit der Montageposition der betreffenden Serration in der Rotorblattlängsrichtung ausgebildet.

Gemäß einer bevorzugten Ausführung des Rotorblatts weist der Winkel zwischen der Ebene je einer der Serrations und der Profilsehne des Rotorblatts für mindestens eine der Serrations einen absoluten Betrag größer als 0 Grad auf, bei einer Abweichung von der Auslegungsluftdichte am Aufstellungsort.

Bei einer Luftdichte, die abweicht von der Auslegungsluftdichte des Rotorblatts, ist die Induktion des Rotorblatts nicht optimal. Es ist somit vorteilhaft den Winkel, zwischen der Ebene je einer der Serrations und der Profilsehne des Rotorblatts, für mindestens eine der Serrations so einzustellen, dass der Winkel nicht gleich null ist. Indem der Winkel von null abweicht, wird die Induktion des Rotorblatts beeinflusst und der Winkel kann so gewählt werden, dass die Induktion des Rotorblatts verbessert wird.

Das Rotorblatt wird für gegebene Umgebungsparameter, insbesondere für die gegebene Luftdichte, optimiert. Das Rotorblatt offenbart die bestmögliche Induktion für die Umgebungsparameter für welche es optimiert wurde und diese gegebene Umgebungsparameter werden Auslegungsparameter des Rotorblatts genannt. Insbesondere wird die Luftdichte, für welche das Rotorblatt optimiert wurde, Auslegungsluftdichte genannt. Um eine unbekannte Auslegungsluftdichte des Rotorblatts bestimmen zu können, kann das Rotorblatt mit der Blattelementmethode, beispielsweise mit variierender Luftdichte, simuliert und optimiert werden und die Luftdichte, für welche das Rotorblatt beispielsweise die besten Induktionswerte offenbart, als die Auslegungsluftdichte des Rotorblatts bezeichnet werden.

Gemäß einer besonders bevorzugten Ausführung des Rotorblatts umfasst der mindestens eine Umgebungsparameter einen Extremwert, einen Durchschnittswert und/oder eine Varianz der Luftdichte und wobei der Winkel zwischen der Ebene mindestens einer der Serrations und der Profilsehne des Rotorblatts mit sinkender Luftdichte in Richtung der Druckseite ansteigt.

Bei sinkender Luftdichte sinkt der Auftrieb des Rotorblatts. Bei ansteigendem Winkel, in Richtung der Druckseite des Rotorblatts, zwischen der Ebene mindestens einer der Serrations und der Profilsehne des Rotorblatts, steigt der Auftrieb des Rotorblatts, da die Profilkrümmung insgesamt effektiv zunimmt. Somit ist es vorteilhaft, mit sinkender Luftdichte den Winkel zwischen der Ebene mindestens einer der Serrations und der Profilsehne des Rotorblatts in Richtung der Druckseite des Rotorblatts zu erhöhen.

Gemäß einer besonders vorteilhaften Ausführung des Rotorblatts beträgt der Winkel bei einergeringen Luftdichte, die mindestens um einen Schwellwert unterhalb der Auslegungsluftdichte, insbesondere wenigstens 0,075 kg/m³ unterhalb der Auslegungsluftdichte liegt, mehr als 0 Grad, in Richtung der Druckseite, bevorzugt mehr als 4 Grad. Hierbei wird angenommen, dass in dieser Ausführung der Winkel bei Auslegungsluftdichte 0 Grad beträgt, wobei selbstverständlich einfach relative Verschiebungen stattfinden, wenn der Winkel bei der Auslegungsluftdichte von 0 Grad verschieden ist.

Eine Luftdichte, welche unterhalb der Auslegungsluftdichte des Rotorblatts liegt, hat insbesondere zur Folge, dass der Auftrieb des Rotorblatts reduziert ist im Vergleich zum Auftrieb desselben Rotorblatts bei Auslegungsluftdichte. Indem der Winkel mehr als 0 Grad, in Richtung der Druckseite, beträgt, wird der Auftrieb des Rotorblatts erhöht. Somit ist es vorteilhaft bei einer Luftdichte, die unterhalb der Auslegungsluftdichte des Rotorblatts liegt, den Winkel auf mehr als 0 Grad, in Richtung der Druckseite, einzustellen. Bevorzugt ist der Winkel auf mehr als 4 Grad eingestellt.

Gemäß einer bevorzugten Ausführung des Rotorblatts ist ein Durchschnitt der Winkel zwischen den jeweiligen Ebenen der Serrations und der Profilsehne des Rotorblatts bei einer Luftdichte, am Aufstellungsort des Rotorblatts, die gleich oder kleiner ist als die Auslegungsluftdichte, größer, in Richtung der Druckseite, als der durchschnittliche Winkel zwischen den jeweiligen Ebenen der Serrations und der Profilsehne desselben Rotorblatts, welches aber für eine Luftdichte größer der Auslegungsluftdichte optimiert wurde.

Durch die Berücksichtigung der durchschnittlichen Winkel kann der Gesamteinfluss der Serrations optimiert werden. Auch wenn beispielsweise die Winkel einzelner der Serrations - beispielsweise aus Lastgründen - in einer abweichenden Richtung gegenüber dem Auslegungsfall abweichen, d.h. also beispielsweise in Richtung der Saugseite, so kann die erfindungsgemäße Ertragssteigerung durch eine durchschnittliche Abwinkelung in Richtung der Druckseite erreicht werden.

Um den Durchschnitt der Winkel zwischen den jeweiligen Ebenen der Serrations und der Profilsehne des Rotorblatts zu erhalten, wird in einer Ausführung jeder Winkel zwischen den jeweiligen Ebenen der Serrations und der Profilsehne des Rotorblatts anhand der Größe der Ebene der jeweiligen Serration und/oder der kürzesten Distanz zwischen Ebene der jeweiligen Serration und deren Endpunkt gewichtet. Alternativ oder zusätzlich kann auch eine Position der jeweiligen Serration in Rotorblattlängsrichtung zur Gewichtung herangezogen werden.

In einer alternativen Ausführung wird, um den Durchschnitt der Winkel zwischen den jeweiligen Ebenen der Serrations und der Profilsehne des Rotorblatts zu erhalten, jeder Winkel zwischen den jeweiligen Ebenen der Serrations und der Profilsehne des Rotorblatts gleich gewichtet. In anderen Worten ausgedrückt, wird das arithmetische Mittel aller Winkel zwischen den jeweiligen Ebenen der Serrations und der Profilsehne des Rotorblatts gebildet.

Gemäß einer vorteilhaften Ausführung des Rotorblatts ist der Winkel zwischen der Ebene mindestens einer der Serrations und der Profilsehne des Rotorblatts ausgebildet, indem
- die Serration eine Wölbung zwischen dem Ort an dem die Serration auf dem Rotorblatt montiert ist und einem beliebigen Ort auf der Serration aufweist, und/oder
- die Serration auf einem beweglichen Teil des Rotorblatts montiert ist, wobei der bewegliche Teil des Rotorblatts so einstellbar ist, dass der Winkel zwischen der Serrations und der Profilsehne des Rotorblatts veränderbar ist, und/oder
- die Serration ein Scharnier aufweist, wobei das Scharnier so einstellbar ist, dass der Winkel zwischen der Serration und der Profilsehne des Rotorblatts veränderbar ist, und/oder
- die Serration so auf dem Rotorblatt montiert ist, dass der Winkel zwischen der Ebene der Serration und der Profilsehne des Rotorblatts von Null abweicht, vorzugsweise indem die Oberfläche des Rotorblatts an der Montagestelle der Serration nicht parallel zur Profilsehne des Rotorblatts ist, und/oder
- die Serration mit Druck, Zug oder Spannung anwinkelt, insbesondere indem ein Zug- oder Druckmechanismus auf die Serration wirkt, um diese anzuwinkeln.

Der Winkel zwischen der Ebene mindestens einer der Serrations und der Profilsehne des Rotorblatts kann vorzugsweise ausgebildet sein, indem die Serration, zwischen der Grundlinie und einem beliebigen Punk der Serration, wobei sich dieser Punkt auf derselben Seite der Grundlinie der Serration befindet wie der Endpunkt der Serration, nicht eben ist, also eine Wölbung aufweist. Vorzugsweise beinhaltet die Serration ein bewegliches, verwinkelbares, drehbares und/oder biegbares Teil, welches dazu ausgebildet ist den Winkel zwischen der Ebene der Serration und der Profilsehne des Rotorblatts einzustellen. Ein weiteres Beispiel ist die Verwendung von Druck, Zug oder Spannung, um den Winkel zwischen der Ebene der Serration und der Profilsehne des Rotorblatts auszubilden.

Die Serration wird vorzugsweise angewinkelt, indem eine mechanische Verbindung, passiv oder aktiv steuerbar, zwischen der Serration und dem Rotorblatt verwendet wird.

Gemäß einer bevorzugten Ausführung des Rotorblatts sind die Längen der Serrations, definiert als die Distanz von der Grundlinie zu dem mindestens einen Endpunkt, in Abhängigkeit des Winkels zwischen mindestens einer der Serrations und der Profilsehne des Rotorblatts ausgebildet.

Es ist vorteilhaft, die Serrations, die näher an dem Spitzenende des Rotorblatts sind, kürzer auszugestalten als die Serrations, die näher an dem Wurzelende des Rotorblatts sind. Insbesondere ist es vorteilhaft, die Länge der Serration, die sich in einem Abschnitt in den äußersten 30% des Rotorblatts befindet, stufenweise zu reduzieren, wobei die kürzeste Serration sich dem Spitzenende des Rotorblatts am nächsten befindet.

Eine vorteilhafte Länge der Serrations ist, vorzugsweise, zwischen 50 und 400 Milimeter.

Es ist insbesondere vorteilhaft, die Länge der Serrations in Abhängigkeit des einzustellenden Winkels zu wählen, wobei die Serrations, welche einen größeren Winkel aufweisen, nicht allzu lang auszubilden sind, damit mechanische Kräfte auf die Serrations begrenzt sind und diese nicht beschädigen.

Gemäß einer bevorzugten Ausführung des Rotorblatts ist der Winkel zwischen der Ebene mindestens einer der Serrations und der Profilsehne des Rotorblatts während des Betriebs des Rotorblatts, in einer Windenergieanlage, einstellbar.

Es ist vorteilhaft, den Winkel zwischen der Ebene mindestens einer der Serrations und der Profilsehne des Rotorblatts während des Betriebs einzustellen, um vorzugsweise auch nach der Inbetriebnahme des Rotorblatts noch die Möglichkeit zu haben, die Induktion des Rotorblatts zu beeinflussen, beispielsweise um Grenzwerte für Schallemission bei möglichst hoher Leistung der Windenergieanlage zu erfüllen.

Die Einstellung des Winkels kann stufenlos ausgebildet sein oder mindestens zwei definiert einstellbare Winkel aufweisen, insbesondere mehr als 20 definiert einstellbare Winkel aufweisen.

Gemäß einer alternativen Ausführungsform des Rotorblatts ist der Winkel zwischen mindestens einer der Serrations und der Profilsehne des Rotorblatts während des Betriebs des Rotorblatts, in einer Windenergieanlage, in Abhängigkeit mindestens eines Umgebungsparameters einstellbar.

Es ist vorteilhaft, den Winkel zwischen der Ebene mindestens einer der Serrations und der Profilsehne des Rotorblatts während des Betriebs einzustellen, um den Winkel vorzugsweise auf die aktuellen Umgebungsparameter zu optimieren. Weiter ist vorzugsweise der Winkel auf vorhersehbare oder zu erwartende Werte der Umgebungsparameter zu optimieren. Die Jahreszeiten sind vorzugsweise indikativ für Werte der Umgebungsparameter, wobei, im Winter andere Werte der Umgebungsparameter vorhersehbar oder zu erwarten sind als im Sommer.

Gemäß einer bevorzugten Ausführung des Rotorblatts ist der Winkel zwischen mindestens einer der Serrations und der Profilsehne des Rotorblatts in Abhängigkeit der Position, in der Rotorblattlängsrichtung, einstellbar, um den Auftrieb des Rotorblatts positionsabhängig, in der Rotorblattlängsrichtung, zu optimieren.

Eine Einstellung des Winkels zwischen mindestens einer der Serrations und der Profilsehne des Rotorblatts in Abhängigkeit der Position, in der Rotorblattlängsrichtung, ermöglicht eine positionsabhängige Optimierung der Induktion des Rotorblatts und ermöglicht vorzugsweise auch eine Einstellung von Lasten, die auf das Rotorblatt wirken. Dies ist insbesondere dann interessant, wenn das Rotorblatt konstruktionsbedingt oder designbedingt in mindestens einem Bereich des Rotorblatts geringere Lastreserven als in anderen Bereichen aufweist.

Gemäß einer bevorzugten Ausführung des Rotorblatts ist die Induktionsverteilung, beziehungsweise die Auftriebsverteilung des Rotorblatts anhand einer entsprechenden Einstellung des Winkels standortabhängig optimierbar.

Wenn das Rotorblatt an mindestens einer Position keine optimale Induktion aufweist, beispielsweise, weil es dort überinduziert ist, ist eine positionsabhängige Optimierung der Induktion des Rotorblatts anhand der Einstellung des Winkels zwischen mindestens einer der Serrations und der Profilsehne des Rotorblatts in Abhängigkeit der Position vorteilhaft.

Gemäß einer alternativen Ausführungsform des Rotorblatts sind die Serrations aus faserverstärktem Kunststoff, insbesondere kohle- und glasfaserverstärktem Kunststoff, aus Kunststoff und/oder aus Metall ausgebildet oder enthalten mindestens eines dieser Materialien.

Faserverstärkter Kunststoff, insbesondere kohle- und glasfaserverstärkter Kunststoff, sowie Kunststoff und Metall sind Materialien die für Serrations vorteilhaft genutzt werden können, weil sie widerstandsfähig und leicht sind.

Gemäß einer bevorzugten Ausführung des Rotorblatts sind die Serrations in das Rotorblatt eingearbeitet, insbesondere sind sie die Serrations mit faserverstärkten Kunststoff in das Rotorblatt eingearbeitet, besonders bevorzugt mit kohle- oder glasfaserverstärkter Kunststoff. Besonders bevorzugt sind die Serrations aus einem dieser Materialien in das Rotorblatt einlaminiert.

Das Einarbeiten der Serrations in das Rotorblatt ist für die Stabilität der Serrations sowie für die Aerodynamik des Rotorblatts vorteilhaft, da die in das Rotorblatt eingearbeiteten Serrations, in Bezug auf das Rotorblatt, keine Absätze oder hervorstehende Kanten am Übergang von Rotorblatt zu Serration offenbaren.

Gemäß einer alternativen Ausführungsform des Rotorblatts weist das Rotorblatt an der Vorderkante oder in einem Abschnitt der Vorderkante eine Erosionsschutzschicht auf, die dazu ausgebildet ist, den Luftwiderstand des Rotorblatts zu senken.

Eine Erosionsschutzschicht ermöglicht es, die Erosion des Rotorblatts zu verringern, vorzugsweise zu verhindern, insbesondere dank einer Oberfläche aus einem korrosionsbeständigem Material. Als korrosionsbeständiges Material wird beispielsweise ein Material verstanden, welches weniger schnell korrodiert als das Material, aus dem das Rotorblatt hauptsächlich besteht.

Eine Erosionsschutzschicht ermöglicht, unter anderem dank einer glatten Oberfläche und der geringen Haftung von Verschmutzung, die Reibung mit der Luft zu reduzieren und somit die Effizienz des Rotorblatts zu steigern, wobei insbesondere die Vermeidung von Erosion eine glatte Oberfläche des Rotorblattes, und somit eine geringe Reibung mit der Luft und zusätzlich längere Haltbarkeit des Rotorblattes, gewährleistet.

Gemäß einer alternativen Ausführungsform des Rotorblatts, weist das Rotorblatt die Erosionsschutzschicht in einem Abschnitt auf, der sich, in der Rotorblattlängsrichtung, in den äußersten, in Richtung des Spitzenendes des Rotorblatts, 30% des Rotorblatts befindet.

In Richtung des Spitzenendes des Rotorblatts nimmt die Luftgeschwindigkeit, relativ zum Rotorblatt, zu. Weil der Luftwiderstand, also die Reibungskraft, die ein sich relativ zur Luft bewegender Körper entgegen der Bewegungsrichtung erfährt, proportional zum Quadrat der Geschwindigkeit zwischen dem Rotorblatt und der Luft ist, wobei die Geschwindigkeit des Rotorblatts abhängig von der betrachteten Position des Rotorblatts ist und in Richtung des Spitzenendes des Rotorblatts zunimmt.

Weil die Luftgeschwindigkeit am Spitzenende des Rotorblatts relativ zum Rotorblatt größer ist als am Wurzelende des Rotorblatts, ist es besonders vorteilhaft die Erosionsschutzschicht in einem Abschnitt in Richtung des Spitzenendes des Rotorblatts anzubringen. Somit ist es vorteilhaft, dass die Erosionsschutzschicht in einer Region in Richtung des Spitzenendes des Rotorblatts anzubringen, weil dort der erzielte Effekt, die Reduzierung des Luftwiderstands, am größten ist.

In einem zweiten Aspekt wird eine Windenergieanlage, welche mindestens ein Rotorblatt gemäß dem ersten Aspekt der vorliegenden Offenbarung oder eine bevorzugte Ausgestaltung des Rotorblatts umfasst, offenbart.

Die Windenergieanlage kann eine beliebige Anzahl an Rotorblättern umfassen, die größer gleich eins ist, wobei mindestens eines der Rotorblättern das Rotorblatt gemäß der Offenbarung oder eine bevorzugte Ausgestaltung des Rotorblatts umfasst.

Gemäß einer bevorzugten Ausführung der Windenergieanlage weist die Windenergieanlage eine Steuerung auf, wobei die Steuerung dazu ausgebildet ist, wenigstens einen Betriebspunkt der Windenergieanlage in Abhängigkeit des Winkels zwischen mindestens einer der Serrations und der Profilsehne des Rotorblatts anzupassen.

Ein betriebspunkt der Windenergieanlage kann, vorzugsweise, ein Pitchwinkel oder eine Rotationsgeschwindigkeit des Rotorblatts enthalten.

Beim Ändern des Winkels zwischen mindestens einer der Serrations und der Profilsehne des Rotorblatts ist es somit vorteilhaft, wenigstens einen Betriebspunkt der Windenergieanlage in Abhängigkeit des Winkels zwischen mindestens einer der Serrations und der Profilsehne des Rotorblatts anzupassen, um die Windenergieanlage zu optimieren, vorzugsweise um deren Leistung und/oder deren Schallemission zu optimieren.

Gemäß einer alternativen Ausführungsform der Windenergieanlage, umfasst der Betriebspunkt eine Rotationsgeschwindigkeit und/oder eine Pitchkennlinie.

In einem dritten Aspekt wird ein Windpark offenbart welcher mehrere Windenergieanlagen umfasst, wobei mindestens eine dieser Windenergieanlagen gemäß dem zweiten Aspekt der vorliegenden Offenbarung ausgebildet ist.

In einem vierten Aspekt wird ein Verfahren zum Optimieren eines Rotorblatts offenbart, wobei das Rotorblatt eine Vorderkante und eine Hinterkante aufweist und sich in der Rotorblattlängsrichtung zwischen einem Wurzelende und einem Spitzenende erstreckt, wobei eine direkte Verbindung zwischen der Vorderkante und der Hinterkante als Profilsehne bezeichnet wird, umfassend:
- Montieren von Serrations im Bereich der Hinterkante des Rotorblatts, wobei jede der Serrations eine Grundlinie, die an der Hinterkante angeordnet ist, und einen Endpunkt, der am weitesten von der Grundlinie entfernt ist, aufweist, die zusammen eine Ebene der Serration aufspannen, dadurch gekennzeichnet, dass bei dem Schritt des Montierens ein Winkel zwischen der Ebene mindestens einer der Serrations und der Profilsehne des Rotorblatts in Abhängigkeit mindestens eines Umgebungsparameters am Aufstellort der Windenergieanlange ausgebildet wird.

Der Zeitpunkt, an welchem der Schritt des Montierens der Serration stattfindet ist nicht ausschlaggebend. Der Schritt des Montierens der Serration kann vor der Inbetriebnahme des Rotorblatts stattfinden sowie auch nach der Inbetriebnahme des Rotorblatts.

Gemäß einer alternativen Ausführungsform umfasst das Verfahren zum Optimieren eines Rotorblatts das Optimieren mindestens einer Serration, die ein Scharnier aufweist, dadurch gekennzeichnet, dass das Scharnier passiv und/oder aktiv, insbesondere anhand eines Motors, eingestellt wird, damit ein Winkel zwischen der Ebene mindestens einer der Serrations und der Profilsehne des Rotorblatts in Abhängigkeit mindestens eines Umgebungsparameters am Aufstellort der Windenergieanlange ausgebildet wird.

Das Scharnier ist vorzugsweise als Klappenscharnier oder als gerolltes Scharnier oder als Stangenscharnier oder als Topfscharnier ausgebildet. Ein passives Einstellen des Scharniers ist vorzugsweise anhand eines mechanischen Befestigungsmechanismus möglich, dieser kann vorzugsweise in einen beweglichen oder in einen unbeweglichen Zustand versetzt werde. Ein aktives Einstellen des Scharniers ist vorzugsweise anhand eines Motors möglich, wobei das Einstellen des Scharniers auch während dem Betrieb des Rotorblatts möglich ist. Ein aktives Einstellen des Scharniers ist auch möglich, wenn das Rotorblatt nicht in Betrieb ist, zum Beispiel vor der Inbetriebnahme des Rotorblatts.

Es ist vorteilhaft, dass eine Serration ein Scharnier aufweist, weil der Winkel zwischen der Ebene der Serration und der Profilsehne des Rotorblatts dadurch einfach einzustellen ist. Ein aktives Einstellen des Scharniers ermöglich ein kontinuierliches Einstellen des Winkels zwischen der Ebene der Serration und der Profilsehne des Rotorblatts und ermöglicht somit eine kontinuierliche Anpassung an die Umgebungsparameter am Aufstellort der Windenergieanlange, was wiederum eine kontinuierliche Optimierung der Leistung des Rotorblatts ermöglicht und somit den Ertrag der Windenergieanlage steigert.

Gemäß einer bevorzugten Ausführungsform umfasst das Verfahren zum Optimieren eines Rotorblatts das Einstellen des Winkels zwischen mindestens einer der Serrations und der Profilsehne des Rotorblatts in Abhängigkeit der Position, in der Rotorblattlängsrichtung, um in mindestens einem Bereich des Rotorblatts die Induktion des mindestens einem Bereich des Rotorblatts, in Abhängigkeit mindestens eines Umgebungsparameters am Aufstellort der Windenergieanlange, zu optimieren.

Das Einstellen des Winkels zwischen mindestens einer der Serrations und der Profilsehne des Rotorblatts in Abhängigkeit der Position, in der Rotorblattlängsrichtung, ermöglicht eine positionsabhängige Änderung, beziehungsweise Einstellung, beziehungsweise Optimierung, der Induktion des Rotorblatts. Diese positionsabhängige Optimierung, beziehungsweise Einstellung, beziehungsweise Änderung, der Induktion des Rotorblatts ermöglicht eine Optimierung der Induktion des Rotorblatts, welche besser auf die gegebenen Eigenschaften des Rotorblatts anpassbar ist.

Die Hauptidee hier ist, dass die Induktion des Rotorblatts zwischen dem Wurzelende und dem Spitzenende lokal an jeder Stelle, an der eine Sarration angeordnet ist, anhand des eingestellten Winkels angepasst bzw. optimiert werden kann. Dies wird durch die Anbauteile, bspw. die Serrations, standortabhängig bspw. durch unterschiedliche radiale Ausdehnung, Geometrie und/oder aber erfindungsgemäß durch die Einstellung des Winkels ermöglicht.

Gemäß einer bevorzugten Ausführungsform umfasst das Verfahren zum Optimieren eines Rotorblatts das Einstellen des Winkels zwischen mindestens einer der Serrations und der Profilsehne des Rotorblatts in Abhängigkeit der Position, in der Rotorblattlängsrichtung, um bei von Auslegungsbedingungen abweichenden Umgebungsparametern, eine lokale Fehlinduktion des Rotorblatts zu vermeiden.

Ein Rotorblatt wird in der Regel für bestimmte Umgebungsparameter ausgelegt beziehungsweise entworfen. Auch wenn ein Rotorblatt ausnahmsweise nicht für bestimmte Umgebungsparameter ausgelegt beziehungsweise entworfen wurde, offenbart ein solches Rotorblatt bestimmbare Werte von Umgebungsparametern für welche die Eigenschaften, beziehungsweise die Induktion, des Rotorblatts am besten sind. Diese bestimmbaren Werte, bestimmbar zum Beispiel indem das Rotorblatt mit der Blattelementmethode, beispielsweise mit variierender Luftdichte, simuliert und optimiert wird oder in einem Windkanal vermessen wird, werden als die Umgebungsparameter betrachtet, für welche das Rotorblatt ausgelegt beziehungsweise entworfen wurde. Für Umgebungsparameter, die von den Umgebungsparametern für welche das Rotorblatt ausgelegt, beziehungsweise entworfen wurde, abweichen, verschlechtern sich die Eigenschaften, beziehungsweise die Induktion, des Rotorblatts. Dies kann zu einer lokalen Abweichung von der optimalen Induktion des Rotorblatts führen. Das Beseitigen von einer lokalen Fehlinduktion des Rotorblatts erhöht vorzugsweise den Ertrag des Rotorblatts und/oder die Stabilität der Induktion des Rotorblatts für variierende Windstärken. Eine Fehlinduktion ist eine Induktion, welche von der nach Theorie von Betz optimalen Induktion abweicht.

Gemäß einer alternativen Ausführungsform umfasst ein Verfahren zum Betrieben einer Windenergieanlage mit einem Rotorblatt gemäß dem ersten Aspekt der vorliegenden Offenbarung oder eine bevorzugte Ausgestaltung des Rotorblatts, den Schritt:
- Anpassen wenigstens eines Betriebspunkt der Windenergieanlage in Abhängigkeit des Winkels zwischen mindestens einer der Serrations und der Profilsehne des Rotorblatts.

Gemäß einer bevorzugten Ausführungsform umfasst das Verfahren zum Warten eines Rotorblatts gemäß dem ersten Aspekt der vorliegenden Offenbarung oder zum Warten einer bevorzugten Ausgestaltung des Rotorblatts oder zum Warten einer Windenergieanlage gemäß dem zweiten Aspekt der vorliegenden Offenbarung oder zum Warten einer bevorzugten Ausgestaltung der Windenergieanlage oder zum Warten eines Windparks gemäß dem dritten Aspekt der vorliegenden Offenbarung, wobei Serrations im Bereich der Hinterkante des Rotorblatts wenigstens einer Windenergieanlage angeordnet sind, wobei jede der Serrations eine Grundlinie, die an der Hinterkante angeordnet ist, und einen Endpunkt, der am weitesten von der Grundlinie entfernt ist, aufweist, die zusammen eine Ebene der Serration aufspannen, wobei das Verfahren den folgenden Schritt umfasst:
- Anpassen eines Winkels zwischen der Ebene mindestens einer der Serrations und der Profilsehne des Rotorblatts in Abhängigkeit mindestens eines Umgebungsparameters am Aufstellort der Windenergieanlange.

Die Grundlinie kann für ein Bürstenbauteil aufgenommen werden. Die Bürste weist keine Grundlinie auf.

Weitere Vorteile und besondere Ausgestaltungen werden nachfolgend mit Verweis auf die beigefügten Figuren beschrieben. Hierbei zeigt:
- Figur 1: zeigt eine schematische Darstellung einer Windenergieanlage gemäß der Erfindung.
- Figur 2: zeigt einen Windpark mit beispielhaft drei Windenergieanlagen.
- Figur 3: zeigt eine schematische Darstellung eines Querschnitts eines Rotorblatts mit Serrations, welche einen Winkel zur Profilsehne offenbaren.
- Figur 4: zeigt eine schematische Darstellung eines Querschnitts des Rotorblatts mit Serrations, welche andere Winkel als in Figur 3 offenbaren.
- Figur 5: zeigt eine schematische Darstellung des Rotorblatts welches Serrations mit verschiedenen Längen und Winkeln offenbart.
- Figur 6: zeigt eine schematische Darstellung des Rotorblatts welches Serrations in einer anderen Ausgestaltungsform zeigt mit verschiedenen Längen und konstanten Winkeln.
- Figur 7: zeigt eine schematische Darstellung des Rotorblatts.

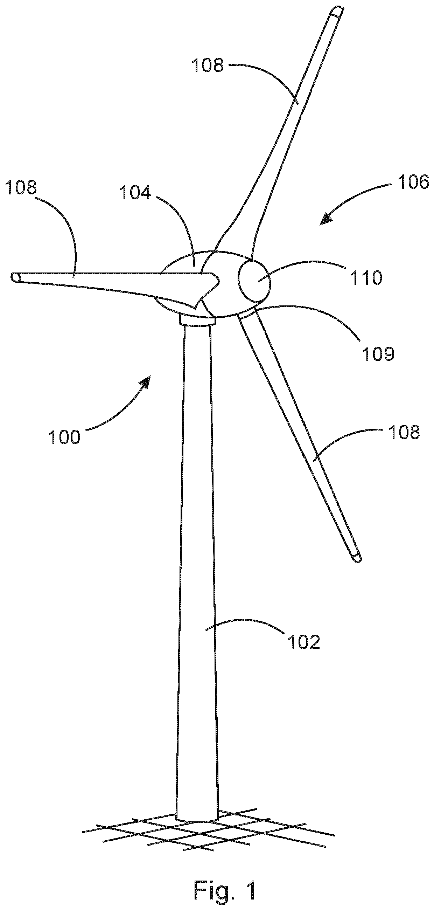

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

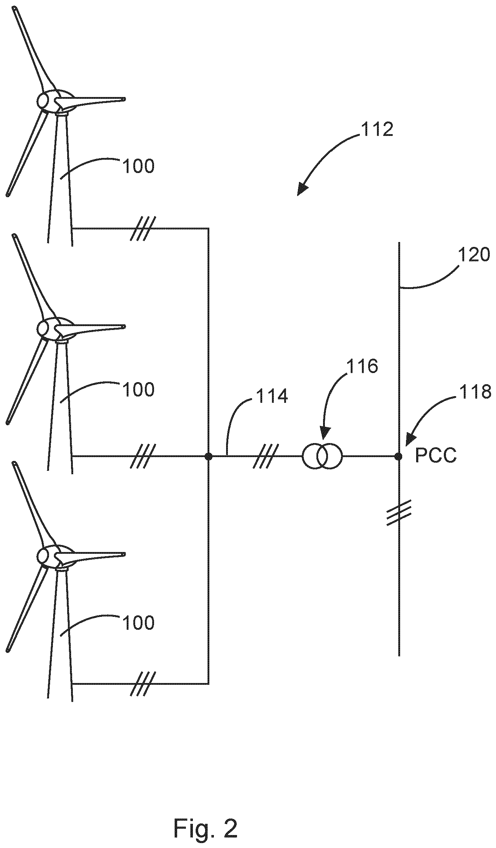

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

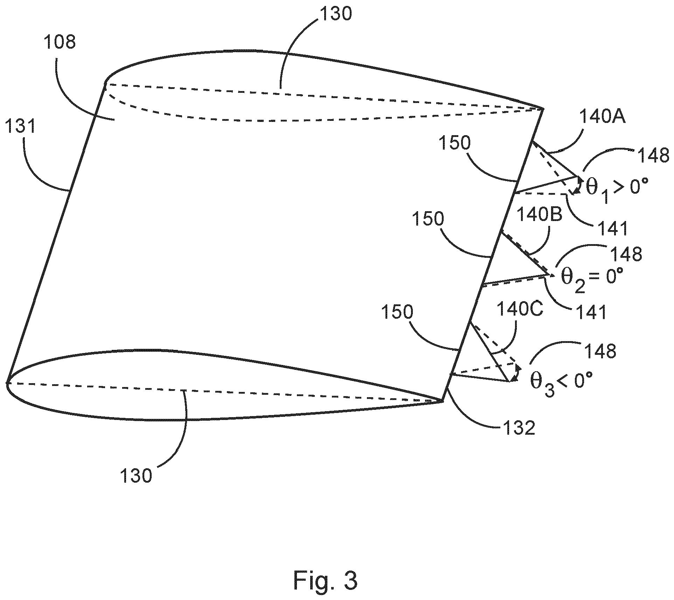

Figur 3 zeigt eine schematische Darstellung eines Querschnitts des Rotorblatts 108 mit Serrations 140A, B, C, welche mit unterschiedlichen Winkeln "θ" an einem Rotorblatt 108 angeordnet sind.

Jede Serration 140 hat eine Grundlinie 150, welche an der Hinterkante angeordnet ist. Gegenüber der Hinterkante 132 ist die Vorderkante 131 zu sehen, zwischen denen sich die Profilsehne 130 erstreckt.

Die Anzahl der Serrations ist natürlich nur beispielhaft, es können auch mehr oder weniger Serrations montiert sein und auch die Geometrie kann beliebig gewählt werden. Beispielsweise kann auch entlang der Hinterkante kein Abstand oder ein größerer Abstand zwischen den Serrations 140 ausgebildet sein.Jede der Serrations 140 kann einen Winkel 148 zu ihrer zugehörigen lokalen Profilsehne 130 aufweisen, der in den Zeichnungen auch mit "θ" angedeutet ist. Dieser Winkel "θ" ist für die jeweilige Serration 140 der Winkel, den die Serration 140 zu einer Ebene aufweist, die von der Hinterkante 132 und der Profilsehne 130 aufgespannt ist.

Die gestrichelt dargestellten Serrations 141 sind zur Orientierung dargestellt und stellen die Projektion der Serrations 140 auf diese Ebene ("Referenzebene") dar.

Es kann gesehen werden, dass der Winkel θ₁ der Serration 140A größer als 0 Grad ist, die entsprechende Serration also in Richtung der Saugseite angewinkelt ist. Der Winkel θ₂ ist gleich 0 Grad, das heißt, dass die Serration 140B genau in der Ebene der gestrichelt dargestellten Serration 141 liegt. Schließlich ist der Winkel θ₃ kleiner als 0 Grad, die Serration 140C also in Richtung der Druckseite abgewinkelt. Die unterschiedlichen Winkel ermöglichen eine lokale Anpassung der Induktionsfaktorverteilung, die letztlich zu einem verbesserten Rotorblatt beiträgt, was auch nachfolgend unter Bezug auf die weiteren Figuren beschrieben wird.

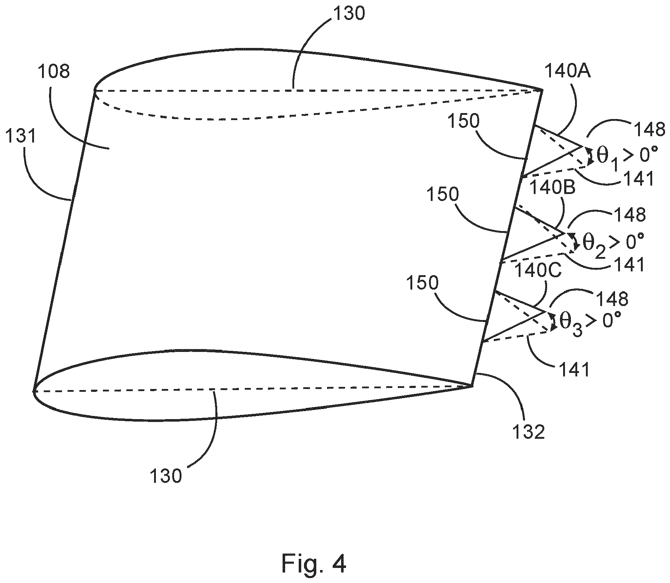

Figur 4 zeigt wie Figur 3 eine schematische Darstellung eines Querschnitts des Rotorblatts 108 mit Serrations 140 A, B, C, welche Winkel 148 offenbaren. Figur 4 unterscheidet sich von Figur 3, indem eine andere mögliche Ausgestaltung der Winkel 148 der Serrations 140 gezeigt wird, nämlich alle Winkel θ₁, θ₂ und θ₃ kleiner als 0 Grad sind und entsprechend zur Druckseite hin angewinkelt sind.

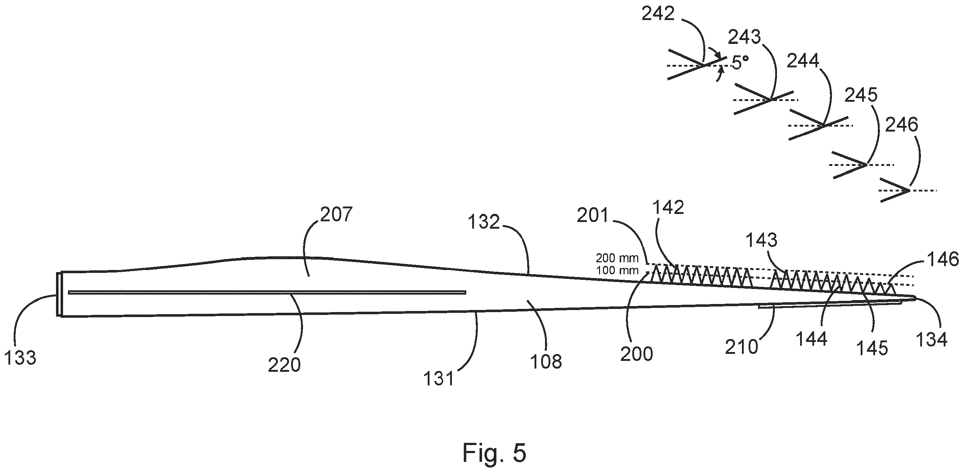

Figur 5 zeigt eine schematische Darstellung des Rotorblatts gemäß der Erfindung. Das Rotorblatt weist Serrations 142-146, auch häufig *trailing edge serrations* (TES) genannt, auf, die beispielsweise auch wie die in Fig. 3 und 4 gezeigten Serrations 140 ausgeführt sein können. Diese Serrations 142-146 können vorteilhaft mit einem Winkel, vgl. auch Figuren 3 und 4, zwischen der Ebene, welche von der Hinterkante 132 und der Profilsehne aufgespannt wird, und den Serrations 142-146 an das Rotorblatt 108 montiert werden.

Auf Figur 5 ist zu sehen, dass für die Serrations 142 eine Skizze das Profil des hinteren Teils 242 des Rotorblatts 108 an der Position der Serrations 142, zeigt. Auf der Skizze des Profils des hinteren Teils 242 des Rotorblatts 108 ist zu sehen, dass die Serrations 142 mit einem Winkel von 5 Grad in Richtung einer Saugseite 207 des Rotorblatts 108 ausgebildet sind.

Die Serrations 142 haben beispielsweise eine Länge von 200 Millimetern, was anhand der gestrichelten Linie 201, die eine Länge von 200 Millimetern kennzeichnet, gezeigt ist.

Für die Serrations 143 ist eine Skizze des Profils des hinteren Teils 243 des Rotorblatts 108 an der Position der Serrations 143, gezeigt. Auf der Skizze des Profils des hinteren Teils 243 des Rotorblatts 108, ist zu sehen, dass die Serrations 143 einem positiven Winkel, in Richtung der Saugseite 207 des Rotorblatts 108, aufweisen.

Die Serrations 143 haben beispielsweise ebenfalls eine Länge von 200 Millimetern, was anhand der gestrichelten Linie 201, die eine Länge von 200 Millimetern kennzeichnet, gezeigt ist.

Für die Serrations 144 ist eine Skizze des Profils des hinteren Teils 244 des Rotorblatts 108 an der Position der Serrations 144, gezeigt. Auf der Skizze des Profils des hinteren Teils 244 des Rotorblatts 108 ist zu sehen, dass die Serrations 144 ebenfalls einen positiven Winkel, in Richtung Saugseite 207 des Rotorblatts 108, aufweisen.

Die Serrations 144 haben eine Länge von beispielsweise 150 Millimetern, was anhand der gestrichelten Linie 201, die eine Länge von 200 Millimetern kennzeichnet, und der gestrichelten Linie 200, die eine Länge von 100 Millimetern kennzeichnet, zu erkennen ist. Sie sind also kürzer als die Serrations 142 und 143.

Für die Serrations 145 ist eine Skizze des Profils des hinteren Teils 245 des Rotorblatts 108 an der Position der Serrations 145, gezeigt. Auf der Skizze des Profils des hinteren Teils 245 des Rotorblatts 108 ist zu sehen, dass die Serrations 145 einem Winkel von 0 Grad aufweisen. Sie sind daher gegenüber den weiteren Serrations 142, 143 und 144 unterschiedlich bezüglich der Profilsehne abgewinkelt.

Die Serrations 145 haben eine Länge von beispielsweise 120 Millimetern, was anhand der gestrichelten Linie 201, die eine Länge von 200 Millimetern kennzeichnet, und der gestrichelten Linie 200, die eine Länge von 100 Millimetern kennzeichnet, zu erkennen ist. Die Serrations 145 sind daher erneut gegenüber den Serrations 144 verkürzt.

Für die Serrations 146 ist eine Skizze des Profils des hinteren Teils 246 des Rotorblatts 108 an der Position der Serrations 146 gezeigt. Auf der Skizze des Profils des hinteren Teils 246 des Rotorblatts 108, ist zu sehen, dass die Serrations 146 einem Winkel von 0 Grad aufweisen. Die Serrations 146 haben eine Länge von beispielsweise 100 Millimetern, was anhand der gestrichelten Linie 200, die eine Länge von 100 Millimetern kennzeichnet, zu erkennen ist.

Insbesondere ist es vorteilhaft, die Länge der Serrations 142-146, die sich in einem bestimmten Abschnitt des Rotorblattes 108 befinden, wobei sich der Abschnitt beispielsweise in den äußersten 30% des Rotorblatts 108 befindet, stufenweise zu reduzieren, wobei die kürzeste Serration 146 dem Spitzenende 134 des Rotorblatts 108 am nächsten ist. Eine vorteilhafte Länge der Serrations 142-146 ist beispielsweise zwischen 50 und 400 Milimeter.

Das Rotorblatt weist vorzugsweise in einem Bereich von dem Wurzelende 133 des Rotorblatts 108 bis zur halben Distanz bis zum Spitzenende 134 des Rotorblatts 108, Vortexgeneratoren 220 auf. Figur 5 ist nur eine vereinfachte Darstellung eines Rotorblatts gemäß der Erfindung.

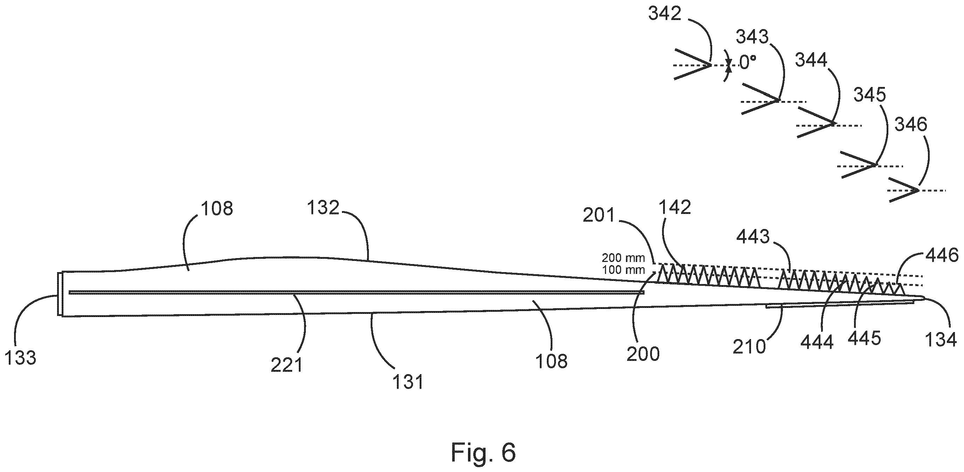

Figur 6 zeigt schematisch und exemplarisch ein weiteres Rotorblatt 108, bei dem gegenüber dem in Fig. 5 gezeigten Rotorblatt die Serrations an andere Umgebungsparameter angepasst sind.

Die Winkel der Serrations 442-443 unterscheiden sich von den Winkeln der Serrations 142-143 von Figur 5, wobei die Winkel der Serrations 442-443 einen kleineren absoluten Betrag aufweisen, was auf den Skizzen der Profile der hinteren Teile 342-343 des Rotorblatts 108 an der Position der Serrations 442-443 gezeigt ist. Zusätzlich oder alternativ kann sich die Länge der Serrations 444-446 von der Länge der Serrations 144-146 von Figur 5 unterscheiden, wobei die Serrations 444-446 länger sind.

Weiter zeigt Figur 6, dass sich die Vortexgeneratoren 220 über eine größere Distanz in Rotorblattlängsrichtung in Richtung des Spitzenende 134 des Rotorblatts erstrecken. Sie reichen also über einen größeren Bereich in Rotorblattlängsrichtung. Auch damit kann eine Anpassung des Rotorblattes an Umgebungsparameters vorgenommen werden, ohne dass strukturelle Änderungen des Rotorblattes vorzunehmen sind.

Eine Kombination aus einem, zwei oder sämtlichen der Maßnahmen a) Anpassung des Winkels der Serrations, b) Anpassung der Länge der Serrations und/oder c) Anpassung der Erstreckung der Vortexgeneratoren in Rotorblattlängsrichtung ist demnach erfindungsgemäß vorteilhaft, um Abweichungen zwischen den der Auslegung zugrunde liegenden Umgebungsparametern und den Umgebungsparametern am Aufstellort der Windenergieanlage zu kompensieren und den Ertrag des Rotorblattes bzw. der Windenergieanlage nahezu unabhängig von den tatsächlichen Umgebungsparametern optimal zu betreiben.

Anhand dieser Unterschiede zu der Ausgestaltung des Rotorblatts von Figur 5, ist das Rotorblatt 108 von Figur 6 beispielsweise für geringere Luftdichten als ein konkretes Beispiel für konkrete Umgebungsparameter am Aufstellungsort der Windenergieanlage optimiert.

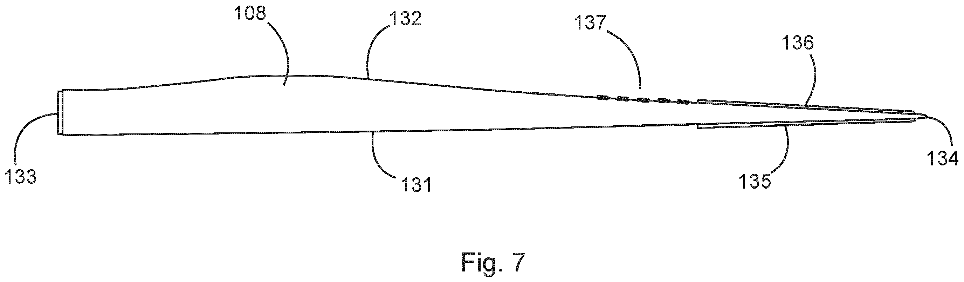

Fig. 7 zeigt eine schematische Darstellung eines weiteren Rotorblatts gemäß der Erfindung. Zusätzlich oder alternativ zu den Anpassungen der Rotorblätter 108 der Figuren 5 und 6 weist das Rotorblatt 108 der Fig. 7 einen in der Längserstreckung veränderbaren Bereich von Serrations 136, 137 auf. Hierbei sind in dem mit einer gestrichelten Linie gezeichneten Bereich von Serrations 137 vorzugsweise in Abhängigkeit wenigstens eines Umgebungsparameters entweder Serrations vorhanden oder nicht. Es können auch mehrere Abstufungen bzw. Zwischenwerte der Erstreckung der Serrations vorgesehen sein.

Damit kann auch durch die Längserstreckung der Serrations eine noch präzisere Anpassung des Rotorblattes an die Umgebungsparameter am Aufstellort erreicht werden.

Das Rotorblatt 108 weist ferner eine Erosionsschutzschicht 135 auf, diese ist in Figur 7 anhand eines Strichs schematisiert. Auch diese Erosionsschutzschicht 135 wird vorzugsweise in ihrer Ausdehnung in Längsrichtung des Rotorblattes 108 abhängig von Umgebungsparametern gewählt.

Beispielhafte Ausführungen:
1. Rotorblatt (108) einer Windenergieanlage (100), wobei das Rotorblatt (108) eine Vorderkante (131) und eine Hinterkante (132) aufweist und sich in einer Rotorblattlängsrichtung zwischen einem Wurzelende (133) und einem Spitzenende (134) erstreckt, wobei eine direkte Verbindung zwischen der Vorderkante (131) und der Hinterkante (132) als Profilsehne (130) bezeichnet wird, wobei das Rotorblatt (108) im Bereich der Hinterkante (132) wenigstens abschnittsweise Serrations (136-137, 140-146, 442-446) aufweist, wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, dadurch gekennzeichnet, dass ein Winkel (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlage (100) ausgebildet ist.
2. Rotorblatt (108) nach der beispielhaften Ausführung 1, wobei der mindestens ein Umgebungsparameter am Aufstellort der Windenergieanlange (100) ein oder mehrere Parameter enthält, die indikativ sind für Luftdichte, Luftfeuchtigkeit, Temperatur, Luftdruck, Luftverschmutzung, Turbulenz bzw. Turbulenzintensität, Scherung und/oder Windgeschwindigkeit.
3. Rotorblatt (108) nach der beispielhaften Ausführung 2, wobei der Parameter einen Extremwert, einen Durchschnittswert und/oder eine Varianz der Luftdichte, Luftfeuchtigkeit, Temperatur, Luftdruck, Luftverschmutzung, Turbulenz bzw. Turbulenzintensität, Scherung und/oder Windgeschwindigkeit umfasst.
4. Rotorblatt (108) nach einer der vorstehenden beispielhaften Ausführungen, wobei der Winkel (148) zwischen der Ebene je einer der Serrations (136-137, 140-146, 442-446) und der Profilsehne (130) des Rotorblatts (108) für mindestens zwei der Serrations (136-137, 140-146, 442-446) unterschiedlich ist.
5. Rotorblatt (108) nach einer der vorstehenden beispielhaften Ausführungen, wobei der Winkel (148) zwischen der Ebene mindestens einer der Serrations (136-137, 140-146, 442-446) und der Profilsehne (130) des Rotorblatts (108) in Abhängigkeit des mindestens einen Umgebungsparameters und zusätzlich in Abhängigkeit der Montageposition der betreffenden Serration (136-137, 140-146, 442-446) in der Rotorblattlängsrichtung ausgebildet ist.
6. Rotorblatt (108) nach einer der vorstehenden beispielhaften Ausführungen, wobei bei einer Abweichung von der Auslegungsluftdichte am Aufstellungsort, der Winkel (148) zwischen der Ebene je einer der Serrations (136-137, 140-146, 442-446) und der Profilsehne (130) des Rotorblatts (148) für mindestens eine der Serrations (136-137, 140-146, 442-446) einen absoluten Betrag größer als 0 Grad aufweist.
7. Rotorblatt (108) nach einer der vorstehenden beispielhaften Ausführungen, wobei der Umgebungsparameter einen Extremwert, einen Durchschnittswert und/oder eine Varianz der Luftdichte umfasst und wobei der Winkel (148) zwischen der Ebene mindestens einer der Serrations (136-137, 140-146, 442-446) und der Profilsehne (130) des Rotorblatts (108) mit sinkender Luftdichte in Richtung der Druckseite ansteigt.
8. Rotorblatt (108) nach einer der vorstehenden beispielhaften Ausführungen, wobei der Winkel (148) bei einer geringen Luftdichte, die mindestens um einen Schwellwert unterhalb der Auslegungsluftdichte, insbesondere wenigstens 0,075 kg/m³ unterhalb der Auslegungsluftdichte liegt, mehr als 0 Grad, in Richtung der Druckseite, beträgt, bevorzugt mehr als 4 Grad beträgt.
9. Rotorblatt (108) nach einer der vorstehenden beispielhaften Ausführungen, wobei ein Durchschnitt der Winkel (148) zwischen den jeweiligen Ebenen der Serrations (136-137, 140-146, 442-446) und der Profilsehne (130) des Rotorblatts (108) bei einer Luftdichte, am Aufstellungsort des Rotorblatts (108), die gleich oder kleiner ist als die Auslegungsluftdichte, größer ist, in Richtung der Druckseite, als der durchschnittliche Winkel (148) zwischen den jeweiligen Ebenen der Serrations (136-137, 140-146, 442-446) und der Profilsehne (130) desselben Rotorblatts (108), welches aber für eine Luftdichte über der Auslegungsluftdichte optimiert wurde.
10. Rotorblatt (108) nach einer der vorstehenden beispielhaften Ausführungen, wobei der Winkel (148) zwischen der Ebene mindestens einer der Serrations (136-137, 140-146, 442-446) und der Profilsehne (130) des Rotorblatts (108) ausgebildet ist, indem die Serration (136-137, 140-146, 442-446) eine Wölbung zwischen dem Ort an dem die Serration (136-137, 140-146, 442-446) auf dem Rotorblatt (108) montiert ist und einem beliebigen Ort auf der Serration (136-137, 140-146, 442-446) aufweist, und/oder die Serration (136-137, 140-146, 442-446) auf einem beweglichen Teil des Rotorblatts (108) montiert ist, wobei das bewegliche Teil des Rotorblatts (108) so einstellbar ist, dass der Winkel (148) zwischen der Serration (136-137, 140-146, 442-446) und der Profilsehne (130) des Rotorblatts (108) veränderbar ist, und/oder die Serration (136-137, 140-146, 442-446) ein Scharnier aufweist, wobei das Scharnier so einstellbar ist, dass der Winkel (148) zwischen der Serration (136-137, 140-146, 442-446) und der Profilsehne (130) des Rotorblatts (108) veränderbar ist, und/oder die Serration (136-137, 140-146, 442-446) so auf dem Rotorblatt (108) montiert ist, dass der Winkel (148) zwischen der Ebene der Serration (136-137, 140-146, 442-446) und der Profilsehne (130) des Rotorblatts (108) von Null abweicht, vorzugsweise indem die Oberfläche des Rotorblatts (108) an der Montagestelle der Serration (136-137, 140-146, 442-446) nicht parallel zur Profilsehne (130) des Rotorblatts (108) ist, und/oder die Serration (136-137, 140-146, 442-446) mit Druck, Zug oder Spannung anwinkelt, insbesondere indem ein Zug- oder Druckmechanismus auf die Serration (136-137, 140-146, 442-446) wirkt, um diese anzuwinkeln.
11. Rotorblatt (108) nach einer der vorstehenden beispielhaften Ausführungen, wobei die Längen der Serrations (136-137, 140-146, 442-446), definiert als die Distanz von der Grundlinie (150) zu dem mindestens einen Endpunkt, in Abhängigkeit des Winkels (148) zwischen mindestens einer der Serrations (136-137, 140-146, 442-446) und der Profilsehne (130) des Rotorblatts (108) ausgebildet sind.
12. Rotorblatt (108) nach einer der vorstehenden beispielhaften Ausführungen, wobei der Winkel (148) zwischen der Ebene mindestens einer der Serrations (136-137, 140-146, 442-446) und der Profilsehne (130) des Rotorblatts (108) während des Betriebs der Windenergieanlage (100) einstellbar ist.
13. Rotorblatt (108) nach einer der vorstehenden beispielhaften Ausführungen, wobei der Winkel (148) zwischen mindestens einer der Serrations (136-137, 140-146, 442-446) und der Profilsehne (130) des Rotorblatts (108) während des Betriebs der Windenergieanlage (100) in Abhängigkeit mindestens eines Umgebungsparameters einstellbar ist.
14. Rotorblatt (108) nach einer der vorstehenden beispielhaften Ausführungen, wobei der Winkel (148) zwischen mindestens einer der Serrations (136-137, 140-146, 442-446) und der Profilsehne (130) des Rotorblatts (108) in Abhängigkeit der Montageposition, in der Rotorblattlängsrichtung, einstellbar ist, um den Auftrieb des Rotorblatts (108) positionsabhängig, in der Rotorblattlängsrichtung, zu optimieren.
15. Rotorblatt (108) nach Ausführung 14, wobei die Induktionsverteilung des Rotorblatts (108) standortabhängig, über entsprechende Einstellung des Winkels (148), optimierbar ist.
16. Rotorblatt (108) nach einer der vorstehenden beispielhaften Ausführungen, wobei die Serrations (136-137, 140-146, 442-446) aus faserverstärktem Kunststoff, insbesondere kohle- und glasfaserverstärktem Kunststoff, aus Kunststoff und/oder aus Metall ausgebildet sind.
17. Rotorblatt (108) nach einer der vorstehenden beispielhaften Ausführungen, wobei die Serrations (136-137, 140-146, 442-446) in das Rotorblatt (108) eingearbeitet sind, insbesondere indem sie mit faserverstärkten Kunststoff in das Rotorblatt (108) eingearbeitet oder einlaminiert sind.
18. Windenergieanlage (100) mit wenigstens einem Rotorblatt (108) nach einer der vorstehenden beispielhaften Ausführungen.
19. Windenergieanlage (100) nach Ausführung 18, wobei die Windenergieanlage (100) eine Steuerung aufweist, wobei die Steuerung dazu ausgebildet ist, wenigstens einen Betriebspunkt der Windenergieanlage (100) in Abhängigkeit des Winkels (148) zwischen mindestens einer der Serrations (136-137, 140-146, 442-446) und der Profilsehne (130) des Rotorblatts (108) anzupassen.
20. Windenergieanlage (100) nach Ausführung 19, wobei der Betriebspunkt eine Rotationsgeschwindigkeit und/oder eine Pitchkennlinie umfasst.
21. Windpark mit mehreren Windenergieanlagen (100) nach einer der Ausführungen 18 bis 20.
22. Verfahren zum Optimieren eines Rotorblatts (108), wobei das Rotorblatt (108) eine Vorderkante (131) und eine Hinterkante (132) aufweist und sich in der Rotorblattlängsrichtung zwischen einem Wurzelende (133) und einem Spitzenende (134) erstreckt, wobei eine direkte Verbindung zwischen der Vorderkante (131) und der Hinterkante (132) als Profilsehne (130) bezeichnet wird, umfassend: Montieren von Serrations (136-137, 140-146, 442-446) im Bereich der Hinterkante (132) des Rotorblatts (108), wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, dadurch gekennzeichnet, dass bei dem Schritt des Montierens ein Winkel (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlange (100) ausgebildet wird.
23. Verfahren nach Ausführung 22, umfassend das Optimieren mindestens einer Serration (136-137, 140-146, 442-446), die ein Scharnier aufweist, dadurch gekennzeichnet, dass das Scharnier passiv und/oder aktiv, insbesondere anhand eines Motors, eingestellt wird, damit ein Winkel (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlange (100) ausgebildet wird.
24. Verfahren nach einer der Ausführungen 22 oder 23, wobei der Winkel (148) zwischen mindestens einer der Serrations (136-137, 140-146, 442-446) und der Profilsehne (130) des Rotorblatts (108) in Abhängigkeit der Position, in der Rotorblattlängsrichtung, eingestellt wird, um in mindestens einem Bereich des Rotorblatts (108) die Induktion des mindestens einem Bereich des Rotorblatts (108), in Abhängigkeit mindestens eines Umgebungsparameters am Aufstellort der Windenergieanlange (100), zu optimieren.
25. Verfahren nach Ausführung 24, wobei der Winkel (148) zwischen mindestens einer der Serrations (136-137, 140-146, 442-446) und der Profilsehne (130) des Rotorblatts (108) in Abhängigkeit der Position, in der Rotorblattlängsrichtung, eingestellt wird um, bei von Auslegungsbedingungen abweichenden Umgebungsparametern, eine lokale Fehlinduktion des Rotorblatts (108) zu vermeiden.
26. Verfahren zum Betrieben einer Windenergieanlage (100) mit einem Rotorblatt (108) nach einer der vorstehenden Ausführungen 1 bis 17, umfassend den Schritt Anpassen wenigstens eines Betriebspunkt der Windenergieanlage (100) in Abhängigkeit des Winkels (148) zwischen mindestens einer der Serrations (136-137, 140-146, 442-446) und der Profilsehne (130) des Rotorblatts (108).
27. Verfahren zum Warten eines Rotorblatts (108) nach einer der Ausführungen 1 bis 17 oder einer Windenergieanlage (100) nach einer der Ausführungen 18 bis 20 oder eines Windparks nach Ausführung 21, wobei Serrations (136-137, 140-146, 442-446) im Bereich der Hinterkante (132) des Rotorblatts (108) wenigstens einer Windenergieanlage angeordnet sind, wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, wobei das Verfahren den folgenden Schritt aufweist: Anpassen eines Winkels (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlange (100).

### Liste der Bezugszeichen:

- 100: Windenergieanlage
- 102: Turm
- 104: Gondel
- 106: Rotor
- 108: Rotorblatt
- 109: Rotorblattwurzel
- 110: Spinner
- 112: Windpark
- 114: Parknetz
- 116: Transformator
- 118: Einspeisepunkt
- 120: Versorgungsnetz
- 130: Profilsehne
- 131: Vorderkante
- 132: Hinterkante
- 133: Wurzelende
- 134: Spitzenende
- 135: Erosionsschutzschicht
- 136-137: Serration
- 140-146: Serration
- 148: Winkel
- 150: Grundlinie
- 200-201: Gestrichelte Linie
- 207: Saugseite
- 220: Vortexgenerator
- 242-246: Hinterer Teil (des Rotorblatts)
- 342-346: Hinterer Teil (des Rotorblatts)
- 442-446: Serration

## Patentansprüche

1. Rotorblatt (108) einer Windenergieanlage (100), wobei das Rotorblatt (108) eine Vorderkante (131) und eine Hinterkante (132) aufweist und sich in einer Rotorblattlängsrichtung zwischen einem Wurzelende (133) und einem Spitzenende (134) erstreckt,
wobei eine direkte Verbindung zwischen der Vorderkante (131) und der Hinterkante (132) als Profilsehne (130) bezeichnet wird,
wobei das Rotorblatt (108) im Bereich der Hinterkante (132) wenigstens abschnittsweise Serrations (136-137, 140-146, 442-446) aufweist,
wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, **dadurch gekennzeichnet, dass**
ein Winkel (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlage (100) ausgebildet ist.

2. Rotorblatt (108) nach Anspruch 1, wobei der mindestens ein Umgebungsparameter am Aufstellort der Windenergieanlange (100) ein oder mehrere Parameter enthält, die indikativ sind für Luftdichte, Luftfeuchtigkeit, Temperatur, Luftdruck, Luftverschmutzung, Turbulenz bzw. Turbulenzintensität, Scherung und/oder Windgeschwindigkeit, wobei der Parameter insbesondere einen Extremwert, einen Durchschnittswert und/oder eine Varianz der Luftdichte, Luftfeuchtigkeit, Temperatur, Luftdruck, Luftverschmutzung, Turbulenz bzw. Turbulenzintensität, Scherung und/oder Windgeschwindigkeit umfasst.

3. Rotorblatt (108) nach einem der vorherigen Ansprüche, wobei der Winkel (148) zwischen der Ebene je einer der Serrations (136-137, 140-146, 442-446) und der Profilsehne (130) des Rotorblatts (108) für mindestens zwei der Serrations (136-137, 140-146, 442-446) unterschiedlich ist und/oder wobei der Winkel (148) zwischen der Ebene mindestens einer der Serrations (136-137, 140-146, 442-446) und der Profilsehne (130) des Rotorblatts (108) in Abhängigkeit des mindestens einen Umgebungsparameters und zusätzlich in Abhängigkeit der Montageposition der betreffenden Serration (136-137, 140-146, 442-446) in der Rotorblattlängsrichtung ausgebildet ist.

4. Rotorblatt (108) nach einem der vorherigen Ansprüche, wobei bei einer Abweichung von der Auslegungsluftdichte am Aufstellungsort, der Winkel (148) zwischen der Ebene je einer der Serrations (136-137, 140-146, 442-446) und der Profilsehne (130) des Rotorblatts (148) für mindestens eine der Serrations (136-137, 140-146, 442-446) einen absoluten Betrag größer als 0 Grad aufweist.

5. Rotorblatt (108) nach einem der vorherigen Ansprüche, wobei der Umgebungsparameter einen Extremwert, einen Durchschnittswert und/oder eine Varianz der Luftdichte umfasst und wobei der Winkel (148) zwischen der Ebene mindestens einer der Serrations (136-137, 140-146, 442-446) und der Profilsehne (130) des Rotorblatts (108) mit sinkender Luftdichte in Richtung der Druckseite ansteigt.

6. Rotorblatt (108) nach Anspruch 5, wobei der Winkel (148) bei einer geringen Luftdichte, die mindestens um einen Schwellwert unterhalb der Auslegungsluftdichte, insbesondere wenigstens 0,075 kg/m³ unterhalb der Auslegungsluftdichte liegt, mehr als 0 Grad, in Richtung der Druckseite, beträgt, bevorzugt mehr als 4 Grad beträgt.

7. Rotorblatt (108) nach einem der vorherigen Ansprüche, wobei ein Durchschnitt der Winkel (148) zwischen den jeweiligen Ebenen der Serrations (136-137, 140-146, 442-446) und der Profilsehne (130) des Rotorblatts (108) bei einer Luftdichte, am Aufstellungsort des Rotorblatts (108), die gleich oder kleiner ist als die Auslegungsluftdichte, größer ist, in Richtung der Druckseite, als der durchschnittliche Winkel (148) zwischen den jeweiligen Ebenen der Serrations (136-137, 140-146, 442-446) und der Profilsehne (130) desselben Rotorblatts (108), welches aber für eine Luftdichte über der Auslegungsluftdichte optimiert wurde.

8. Rotorblatt (108) nach einem der vorherigen Ansprüche, wobei der Winkel (148) zwischen der Ebene mindestens einer der Serrations (136-137, 140-146, 442-446) und der Profilsehne (130) des Rotorblatts (108) ausgebildet ist, indem
- die Serration (136-137, 140-146, 442-446) eine Wölbung zwischen dem Ort an dem die Serration (136-137, 140-146, 442-446) auf dem Rotorblatt (108) montiert ist und einem beliebigen Ort auf der Serration (136-137, 140-146, 442-446) aufweist, und/oder
- die Serration (136-137, 140-146, 442-446) auf einem beweglichen Teil des Rotorblatts (108) montiert ist, wobei das bewegliche Teil des Rotorblatts (108) so einstellbar ist, dass der Winkel (148) zwischen der Serration (136-137, 140-146, 442-446) und der Profilsehne (130) des Rotorblatts (108) veränderbar ist, und/oder
- die Serration (136-137, 140-146, 442-446) ein Scharnier aufweist, wobei das Scharnier so einstellbar ist, dass der Winkel (148) zwischen der Serration (136-137, 140-146, 442-446) und der Profilsehne (130) des Rotorblatts (108) veränderbar ist, und/oder
- die Serration (136-137, 140-146, 442-446) so auf dem Rotorblatt (108) montiert ist, dass der Winkel (148) zwischen der Ebene der Serration (136-137, 140-146, 442-446) und der Profilsehne (130) des Rotorblatts (108) von Null abweicht, vorzugsweise indem die Oberfläche des Rotorblatts (108) an der Montagestelle der Serration (136-137, 140-146, 442-446) nicht parallel zur Profilsehne (130) des Rotorblatts (108) ist, und/oder
- die Serration (136-137, 140-146, 442-446) mit Druck, Zug oder Spannung anwinkelt, insbesondere indem ein Zug- oder Druckmechanismus auf die Serration (136-137, 140-146, 442-446) wirkt, um diese anzuwinkeln.

9. Rotorblatt (108) nach einem der vorherigen Ansprüche, wobei die Längen der Serrations (136-137, 140-146, 442-446), definiert als die Distanz von der Grundlinie (150) zu dem mindestens einen Endpunkt, in Abhängigkeit des Winkels (148) zwischen mindestens einer der Serrations (136-137, 140-146, 442-446) und der Profilsehne (130) des Rotorblatts (108) ausgebildet sind.

10. Rotorblatt (108) nach einem der vorherigen Ansprüche, wobei der Winkel (148) zwischen der Ebene mindestens einer der Serrations (136-137, 140-146, 442-446) und der Profilsehne (130) des Rotorblatts (108) während des Betriebs der Windenergieanlage (100) einstellbar ist, insbesondere in Abhängigkeit mindestens eines Umgebungsparameters einstellbar ist.

11. Rotorblatt (108) nach einem der vorherigen Ansprüche, wobei der Winkel (148) zwischen mindestens einer der Serrations (136-137, 140-146, 442-446) und der Profilsehne (130) des Rotorblatts (108) in Abhängigkeit der Montageposition, in der Rotorblattlängsrichtung, einstellbar ist, um den Auftrieb des Rotorblatts (108) positionsabhängig, in der Rotorblattlängsrichtung, zu optimieren, wobei insbesondere die Induktionsverteilung des Rotorblatts (108) standortabhängig, über entsprechende Einstellung des Winkels (148), optimierbar ist.

12. Rotorblatt (108) nach einem der vorherigen Ansprüche, wobei die Serrations (136-137, 140-146, 442-446) aus faserverstärktem Kunststoff, insbesondere kohle- und glasfaserverstärktem Kunststoff, aus Kunststoff und/oder aus Metall ausgebildet sind, und/oder wobei die Serrations (136-137, 140-146, 442-446) in das Rotorblatt (108) eingearbeitet sind, insbesondere indem sie mit faserverstärkten Kunststoff in das Rotorblatt (108) eingearbeitet oder einlaminiert sind.

13. Windenergieanlage (100) mit wenigstens einem Rotorblatt (108) nach einem der vorstehenden Ansprüche, wobei die Windenergieanlage (100) eine Steuerung aufweist, die insbesondere dazu ausgebildet ist, wenigstens einen Betriebspunkt der Windenergieanlage (100) in Abhängigkeit des Winkels (148) zwischen mindestens einer der Serrations (136-137, 140-146, 442-446) und der Profilsehne (130) des Rotorblatts (108) anzupassen.

14. Verfahren zum Optimieren eines Rotorblatts (108), wobei das Rotorblatt (108) eine Vorderkante (131) und eine Hinterkante (132) aufweist und sich in der Rotorblattlängsrichtung zwischen einem Wurzelende (133) und einem Spitzenende (134) erstreckt, wobei eine direkte Verbindung zwischen der Vorderkante (131) und der Hinterkante (132) als Profilsehne (130) bezeichnet wird, umfassend:
- Montieren von Serrations (136-137, 140-146, 442-446) im Bereich der Hinterkante (132) des Rotorblatts (108), wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, **dadurch gekennzeichnet, dass** bei dem Schritt des Montierens ein Winkel (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlange (100) ausgebildet wird.

15. Verfahren zum Warten eines Rotorblatts (108) nach einem der Ansprüche 1 bis 12 oder einer Windenergieanlage (100) nach Anspruch 13,
wobei Serrations (136-137, 140-146, 442-446) im Bereich der Hinterkante (132) des Rotorblatts (108) wenigstens einer Windenergieanlage angeordnet sind, wobei jede der Serrations (136-137, 140-146, 442-446) eine Grundlinie (150), die an der Hinterkante (132) angeordnet ist, und einen Endpunkt, der am weitesten von der Grundlinie (150) entfernt ist, aufweist, die zusammen eine Ebene der Serration (136-137, 140-146, 442-446) aufspannen, wobei das Verfahren den folgenden Schritt aufweist:
- Anpassen eines Winkels (148) zwischen der Ebene mindestens einer der Serrations (136-137, 140-146, 442-446) und der Profilsehne (130) des Rotorblatts (108) in Abhängigkeit mindestens eines Umgebungsparameters am Aufstellort der Windenergieanlange (100).
